# EUROPEAN PATENT SPECIFICATION

(11) **EP 4 370 313 B1**
(45) Date of publication and mention of the grant of the patent: **17.09.2025**
(21) Application number: 22748359.1
(22) Date of filing: 13.07.2022
(51) Int. Cl.: B29C 70/30, B29C 70/54, F17C 1/06

(54) **DOME REINFORCEMENT SHELL FOR A PRESSURE VESSEL AND METHOD FOR ITS MANUFACTURE**
KUPPELFÖRMIGE VERSTÄRKUNGSSCHALE FÜR EINEN DRUCKBEHÄLTER UND VERFAHREN ZU DEREN HERSTELLUNG
COQUE DE RENFORT EN DÔME POUR RÉCIPIENT SOUS PRESSION ET SON PROCÉDÉ DE FABRICATION

(30) Priority: 16.07.2021 LU 102846
(43) Date of publication of application: 22.05.2024
(73) Proprietor: PLASTIC OMNIUM NEW ENERGIES FRANCE, 69007 Lyon (FR)
(72) Inventor: CRIEL, Bjorn, 1130 BRUXELLES (BE); NOUWEN, Geert, 1130 BRUXELLES (BE); DEVISSCHER, Dries, 1130 BRUXELLES (BE); NGUYEN, Khanh-Hung, 1130 BRUXELLES (BE)
(74) Representative: LLR
(86) International application number: PCT/EP2022/069614
(87) International publication number: WO 2023/285537

(56) References cited:
- EP-A1- 0 810 081
- EP-A1- 2 418 412
- WO-A1-2018/210606
- WO-A1-95/22030
- US-A1- 2020 141 538

## Description

The invention relates to pressure vessels for vehicles. More precisely, the invention relates to a dome reinforcement shell for a pressure vessel, a pressure vessel comprising such a dome reinforcement shell, a vehicle comprising such a pressure vessel and a method for manufacturing a dome reinforcement shell for a pressure vessel as well as to a method for manufacturing a pressure vessel.

High pressure vessels for vehicles generally comprise a hollow container, also called a liner, having a general cylindrical shape with two dome-shaped longitudinal ends and made of plastic material, such material being chosen for being lightweight and cheap to produce, or other material such as metal (e.g. aluminum). This container is intended for storing gas under pressure, for example dihydrogen, to be used by the vehicle equipped with the pressure vessel for diverse functions, such as source of power. The gas under pressure exerts strong constraints on the inner surface of the container which may damage the integrity of the container and cause hazardous leakage, especially with combustible gas like dihydrogen.

To improve the mechanical properties of the container, it is known to wind a filament made of a reinforcing fiber, for example carbon fiber, all around the outer surface of the container. The filament is embedded in a resin to facilitate the winding and to make sure that each piece of the outer surface of the containeris covered.

For the dome-shaped longitudinal ends of the container, it is known to manufacture a dome reinforcement part or dome reinforcement shell, comprising a winding of filament, independently of the container and then, in a subsequent step, fitting the dome reinforcement shell on the container. The document DE 10 2017 208 492 A1 provides an example of such a dome reinforcement shell. However, it comes with several drawbacks.

First, the way and the order in which the layers of filament are wound in this document make it so sharp edges are present on the end of each layer because the pole opening of each subsequent layer is visible from the outer side of the dome reinforcement shell. These sharp edges constitute locations of stress concentration forming local weak spots of the dome reinforcement shell and, de facto, on the pressure vessel, which could eventually cause a breakage of the pressure vessel. This is critical because the longitudinal ends of the pressure vessels are more subject to breakage than their central cylindrical part.

Furthermore, the tie-on part of the winding according to this document, that is to say the start of the winding operation, is complicated to implement as it follows a low-angle helical pattern. It is necessary to start the winding with a hoop pattern and then to transition to a low-angle helical pattern. But as the hoop layers does not contribute to the improvement of the mechanical properties of the dome reinforcement shell, they lead to a waste of filament and to an unnecessary increase in the weight of the dome reinforcement shell, which should be prevented in order to avoid an overweight of the pressure vessel and the vehicle equipped with it. WO95/22030 A1 discloses a pressure vessel liner for fuel tanks used to store high pressure gasses which is overwrapped with both low-angle helical and high-angle helical filament windings.

In view of the above, there exists a need for optimizing the dome reinforcement shell mechanical properties and limiting the dome reinforcement shell weight.

To this end, it is provided according to the invention a dome reinforcement shell for a pressure vessel according to claim 1.

Thanks to the relative position of the at least one proximal layer with respect to the at least one distal layer, the most external layer of the dome reinforcement shell has a smaller polar opening than the polar openings of the layers beneath. As such, no sharp edges, or at least fewer sharp edges, are present on the outer side of the dome reinforcement shell, which means it comprises fewer weak spots of stress concentration. This permits to improve the mechanical properties of the dome reinforcement shell compared to the one of the prior art document previously discussed.

In addition, thanks to the relative position of the at least one proximal layer with respect to the at least one distal layer, the tie-on part of the winding no longer needs a start with the hoop pattern winding. This results in a simpler winding operation and in a reduced quantity of filament needed for the winding, thus decreasing the mass and production cost of the dome reinforcement shell. As a reference, it has been measured that the invention permits to obtain, at constant mechanical properties compared to the prior art document, a reduction in the mass of the outer composite structure of the pressure of vessel of about 10% to 15%.

The start angle α₁ is the angle formed between the central axis and a "start" tangent of an orthogonal projection of a fiber tow of the proximal layer onto a cut plane passing through the central axis.

The projected fiber tow of the proximal layer has two extremities: one extremity is a free extremity, resulting from a cutting process presented below, and the other extremity is a continuation extremity, meaning the fiber tow of the proximal layer is not cut but continues its trajectory in other planes. The cut plane passing through the central axis is the plane on which a mid-point of the free extremity is projected on the central axis. The "start" tangent is the tangent at the continuation extremity.

The start angle α₂ is the angle formed between the central axis and a "start" tangent of an orthogonal projection of a fiber tow of the distal layer onto a cut plane passing through the central axis.

By the expression "filament", it is meant continuous fiber tows, preferably carbon fibers, glass fibers or aramid fibers, impregnated with a liquid matrix so as to form a composite material, or not pre-impregnated (i.e. dry fibers). There are two main families of composite materials, depending on the type of matrix used. The thermoset composites and the thermoplastic composites, which are formed with a thermoset resin or a thermoplastic polymer as matrix.

A thermoset resin is formed by mixing two or more reactive components forming a reactive thermoset precursor, which reacts upon exposure to curing conditions (e.g. heat, UV or other radiations, or simply by contacting them with one another, etc.) to form the thermoset resin. The thermoset matrix must be fully cured to yield high performance composites. Once cured, the thermoset resin is solid and cannot be further processed or reshaped as the resin is unable to flow anymore. Examples of thermoset resins include unsaturated polyester, epoxy, vinyl ester, polyurea, isocyanurate, and polyurethane resins. It is possible to produce thermoset prepregs made of fibers impregnated with a reactive resin which has been only partially cured to make it tacky, but still soft. The prepregs can be stored and later further processed under pressure by heating or exposing the resin to UV to complete curing and consolidating the prepregs.

A thermoplastic polymer can change from a solid state (or non-flowable state) to a liquid state (or flowable state) and reverse by increasing and lowering the temperature, respectively. In case of semi-crystalline polymers, lowering the temperature of the thermoplastic drives the formation of crystals and the solidification of the thermoplastic. Inversely, heating a semi-crystalline polymer above the melting temperature thereof melts the crystals and the thermoplastic can flow. Examples of semi-crystalline thermoplastics include polyether ketones such as polyether ether ketone (PEEK), polyether ketone ketone (PEKK), poly ether ketone ketone ether ketone (PEKKEK), polyamides, such as polyamide 6 (PA6), polyamide 66 (PA66), polyamide 10 (PA10), polyamide 11 (PA11), polyamide 12 (PA12), polyolefins such as polyethylene (PE), polypropylene (PP), and the like. Amorphous thermoplastics do not form crystals and do not have a melting temperature. The amorphous thermoplastics solidify or become flowable depending on whether the material temperature is below or above the glass transition temperature thereof. Examples of amorphous thermoplastics include polyetherimide (PEI), polysulfone (PSU), polyethersulfone (PES), polycarbonate (PC), polystyrene (PS), thermoplastic polyurethane (TPU), and the like. Both semi-crystalline and amorphous thermoplastics can therefore be reshaped by heating them above their melting or glass transition temperatures and frozen into their new shape by lowering the temperature accordingly. Even though not strictly correct from a physical point of view, for sake of simplicity, both semi-crystalline and amorphous thermoplastics in a liquid state are herein referred to as a "thermoplastic melt".

Advantageously, the layers of fiber-reinforced composite material are tape-shaped.

This shape of filament is specifically suitable for efficiently covering the shape of the dome reinforcement shell and for achieving a satisfactory cohesion of the winding.

Advantageously, α₁ is comprised between 60° and 75°, preferably comprised between 70° and 75°.

Advantageously, α₂ is comprised between 10° and 20°, preferably comprised between 13° and 17°.

These values are suitable for the dome reinforcement shell and easy to implement in the manufacturing of the dome reinforcement shell.

Advantageously, the dome reinforcement shell further comprises at least one set of intermediate layers of fiber-reinforced composite material laid between the at least one proximal layer and the at least one distal layer, each of the sets of intermediate layers having a start angle αᵢ with respect to the central axis strictly comprised between α₁ and α₂.

It is thus possible for the dome reinforcement shell to have layers laid according to multiple types of patterns, making it adaptable to any design of pressure vessel.

The start angle αᵢ is the angle formed between the central axis and a "start" tangent of an orthogonal projection of a fiber tow of the intermediate layer onto a cut plane passing through the central axis.

Preferably, the dome reinforcement shell comprises several sets of intermediate layers which start angles αᵢ with respect to the central axis gradually decrease from the at least one proximal layer to the at least one distal layer.

This order of intermediate layers provides better mechanical properties to the dome reinforcement shell.

Advantageously, the dome reinforcement shell further comprises an integral extension portion of revolution about the central axis extending axially from the base of the dome-shaped portion.

The integral extension portion has an inner surface and an outer peripheral surface. Preferably, the outer peripheral surface of the integral extension portion is a cylindrical surface whereas the inner surface of the integral extension portion is a surface selected from the group consisting of cylindrical, frustoconical, curved and combinations thereof.

It is thus possible for the dome reinforcement shell to cover an intermediate portion of a liner if this design is preferred.

Advantageously, the dome reinforcement shell further comprises at least one additional layer of fiber-reinforced composite material, the at least one additional layer having a start angle α₀ with respect to the central axis, with α₀ strictly comprised between α₁ and 90°, and preferably comprised between 82° and 87°.

The at least one additional layer of fiber-reinforced composite material lays anywhere in the lay-up. Preferably, the additional layer of fiber-reinforced composite material lays below the at least one proximal layer.

The at least one additional layer permits to further improve the mechanical properties of the dome reinforcement shell by providing the necessary structural strength to the dome reinforcement shell. This provision also allows reducing the load on the first layer of the outer composite structure when the dome reinforcement shell comprises an integral extension portion. Indeed, it has been observed a reduction of the filament stress in the direction of the fibers in the first layer of the outer composite structure surrounding the integral extension portion of the dome reinforcement shell.

The start angle α₀ is the angle formed between the central axis and a "start" tangent of an orthogonal projection of a fiber tow of the start layer onto a cut plane passing through the central axis.

A pressure vessel comprises a boss for charging and discharging a fluid into and out of the liner. In order to prevent a "bridging" near the boss, additional low-angle helical layers can be added to the lay-up. A "bridging" is the appearance of cavities in the dome reinforcement shell when newly positioned fiber tows are not in contact with previously positioned fiber tows.

Alternatively, the "bridging" can be limited by increasing the thickness of the layers near the boss during the winding of the low-angle helical layers.

The objective is to have as little cavities as possible in the dome reinforcement shell because they could lead to premature rupture of the dome reinforcement shell and thus the pressure vessel.

Preferably, the dome reinforcement shell is such that:
- the at least one proximal layer has an end angle β₁ with respect to the central axis, with β₁ strictly comprised between 40° and 90°, and
- the at least one distal layer has an end angle β₂ with respect to the central axis, with β₂ strictly comprised between 40° and β₁, and/or
- each of the sets of intermediate layers has an end angle βᵢ with respect to the central axis strictly comprised between β₁ and β₂, and/or
- the at least one additional layer has an end angle β₀ with respect to the central axis, with β₀ strictly comprised between β₁ and 90°, and preferably comprised between 82° and 87°.

These values are suitable for the dome reinforcement shell and easy to implement in the manufacturing of the dome reinforcement shell.

The end angle β₁ is the angle formed between the central axis and an "end" tangent of an orthogonal projection of a fiber tow of the proximal layer onto a cut plane passing through the central axis.

The projected fiber tow of the proximal layer has two extremities: one extremity is a free extremity, resulting from a cutting process presented below, and the other extremity is a continuation extremity, meaning the fiber tow of the proximal layer is not cut but continues its trajectory in other planes. The cut plane passing through the central axis is the plane on which a mid-point of the free extremity is projected on the central axis. The "end" tangent is the tangent at the free extremity.

The end angle β₂ is the angle formed between the central axis and an "end" tangent of an orthogonal projection of a fiber tow of the distal layer onto a cut plane passing through the central axis.

The end angle βᵢ is the angle formed between the central axis and an "end" tangent of an orthogonal projection of a fiber tow of the intermediate layer onto a cut plane passing through the central axis.

The end angle β₀ is the angle formed between the central axis and an "end" tangent of an orthogonal projection of a fiber tow of the start layer onto a cut plane passing through the central axis.

Preferably, the dome reinforcement shell further comprises at least one additional layer of fiber-reinforced composite material, the at least one additional layer being a hoop layer forming an angle α₀' with respect to the longitudinal axis, with α₀' approximately equal to 90°.

The at least one additional layer of fiber-reinforced composite material lays anywhere in the lay-up. Preferably, the additional layer of fiber-reinforced composite material lays below the at least one proximal layer.

The at least one additional layer with a hoop pattern permits to easily improve the mechanical properties of the dome reinforcement shell and reduce the load on the first layer of the outer composite structure when the dome reinforcement shell comprises an integral extension portion. Indeed, it has been observed a reduction of the filament stress in the direction of the fibers in the first layer of the outer composite structure surrounding the integral extension portion of the dome reinforcement shell.

It is also provided according to the invention a pressure vessel comprising:
- a liner defining a fluid storage chamber,
- at least one dome reinforcement shell as presented above, fit over a dome-shaped longitudinal end of the liner,
- a boss, and
- an outer composite structure enclosing or encasing the liner and the at least one dome reinforcement shell.

Advantageously, the pressure vessel comprises two dome reinforcement shells as presented above, fitted over two dome-shaped longitudinal ends of the liner.

Advantageously, the liner comprises an intermediate portion dimensioned so as to accommodate the at least one dome reinforcement shell such that the at least one dome reinforcement shell flushes with the liner.

By the expression "the at least one dome reinforcement shell flushes with the liner", is meant that the outer surface of the liner is geometrically blended with the outer surface of the at least one dome reinforcement shell.

The intermediate portion is located between and connects a central cylindrical portion of the liner and a dome-shaped longitudinal end of the liner. The intermediate portion has an outer peripheral surface selected from the group consisting of cylindrical, frustoconical, curved and combinations thereof. In case the outer peripheral surface of the intermediate portion is a cylindrical surface, the liner can be seen as a stepped liner comprising a square outer shoulder between the central cylindrical portion and the dome-shaped longitudinal end.

As such, the outer surface of the liner comprising the at least one dome reinforcement shell is particularly smooth. This improves the application of the outer composite structure and reduces the stress levels within the pressure vessel.

It is also provided according to the invention a vehicle comprising a pressure vessel as presented above.

It is also provided according to the invention a method for manufacturing a pair of dome reinforcement shells for a pressure vessel according to claim 14.

Advantageously, the mandrel further comprises a central portion of revolution about a longitudinal axis and two longitudinal ends, the two symmetrical dome-shaped portions being located at the longitudinal ends of the central portion such that the central axis of the two symmetrical dome-shaped portions is coaxial with the longitudinal axis of the central portion.

Advantageously, the method for manufacturing a pair of dome reinforcement shells for a pressure vessel further comprises a step occurring after step (c1) consisting in:
(d1) splitting the pair of dome reinforcement shells into two symmetrical parts, thus obtaining two separate dome reinforcement shells.

Preferably, the splitting of step (d1) is carried out by cutting the pair of dome reinforcement shells in two symmetrical parts, preferably by circumferentially cutting the pair of dome reinforcement shells in two symmetrical parts.

Advantageously, α₁ is comprised between 60° and 75°, preferably comprised between 70° and 75°.

Advantageously, α₂ is comprised between 10° and 20°, preferably comprised between 13° and 17°.

Advantageously, the method for manufacturing a pair of dome reinforcement shells for a pressure vessel further comprises a step occurring before step (c1) consisting in:
(b2) laying at least one set of intermediate layers of fiber-reinforced composite material on the mandrel between the at least one proximal layer and the at least one distal layer, each of the sets of intermediate layers having a start angle αᵢ with respect to the central axis strictly comprised between α₁ and α₂.

Preferably, step (b2) consists in laying several sets of intermediate layers which start angles αᵢ with respect to the central axis gradually decrease from the at least one proximal layer to the at least one distal layer.

According to an advantageous embodiment, the method for manufacturing a pair of dome reinforcement shells for a pressure vessel further comprises a step occurring before step (a1) consisting in either:
(a0) laying at least one additional layer of fiber-reinforced composite material on the mandrel below the at least one proximal layer, the at least one additional layer having a start angle α₀ with respect to the central axis, with α₀ strictly comprised between α₁ and 90°, and preferably comprised between 82° and 87°, or
(a0') laying at least one additional layer of fiber-reinforced composite material on the mandrel below the at least one proximal layer, the at least one additional layer being a hoop layer forming an angle α₀' with respect to the central axis, with α₀' approximately equal to 90°.

The method can thus be adapted depending on whether the dome reinforcement shell comprises an integral extension portion or not.

It is also provided according to the invention a method for manufacturing a pressure vessel, comprising the following steps:
- providing a liner defining a fluid storage chamber,
- coupling a boss to a dome-shaped longitudinal end of the liner for charging and discharging a fluid into and out of the fluid storage chamber,
- manufacturing at least one dome reinforcement shell as presented above,
- removing the at least one dome reinforcement shell from the mandrel,
- fitting the at least one dome reinforcement shell over the dome-shaped longitudinal end of the liner, and
- laying an outer composite structure over the liner and the at least one dome reinforcement shell.

Advantageously, method for manufacturing a pressure vessel involves manufacturing two dome reinforcement shells as presented above, removing the two dome reinforcement shells from the mandrel, fitting the two dome reinforcement shells over the dome-shaped longitudinal ends of the liner and laying an outer composite structure over the liner and the two dome reinforcement shells.

Advantageously, the liner comprises an intermediate portion dimensioned so as to accommodate the at least one dome reinforcement shell such that the at least one dome reinforcement shell flushes with the liner.

### Brief description of the figures

Other features and advantages would appear by reading the following description, given as an illustrative and non-restrictive example, and with the annexed drawings in which:
- figure 1 is a general view of a vehicle according to the invention,
- figure 2 is a cross section of a pressure vessel comprising a dome reinforcement shell according to a first embodiment of the invention,
- figures 3a, 3b, 3c and 3d are simulation graphics comparing the repartition of different internal stresses in the dome reinforcement shell according to the invention and a dome reinforcement shell of the prior art,
- figure 4 is a view similar to figure 2 but with an outer composite structure fit over the dome reinforcement shell,
- figure 5 is a simulation graphic comparing the internal stresses in the first layer of the outer composite structure depending on whether the dome reinforcement shell according to the invention comprises an additional layer or not, and
- figure 6 is a cross section of a pressure vessel comprising a dome reinforcement shell according to a second embodiment of the invention.

### Detailed description

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

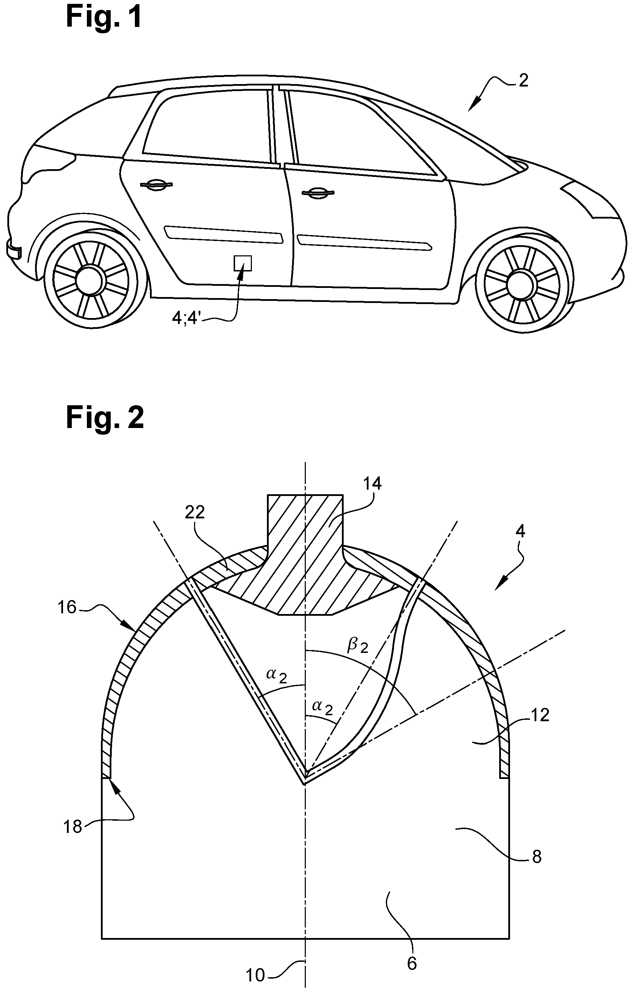

Figure 1 represents a vehicle 2 comprising a pressure vessel 4; 4' configured for containing a gas under high pressure. For example, the pressure vessel 4; 4' may contain dihydrogen for powering a fuel cell of the vehicle. By the expression "pressure vessel", is meant a vessel intended for storing gas under pressure able to withstand an internal pressure going up to 700 bar. For example, the pressure vessel may be compliant with Addendum 133 - Regulation No. 134 of the "Agreement Concerning the Adoption of Uniform Technical Prescriptions for Wheeled Vehicles, Equipment and Parts which can be Fitted and/or be Used on Wheeled Vehicles and the Conditions for Reciprocal Recognition of Approvals Granted on the Basis of these Prescriptions" issued by the United Nations.

Figure 2 represents a half of a transversal section of a pressure vessel 4 according to a first embodiment of the invention. The pressure vessel 4 comprises a liner 6 defining a fluid storage chamber of the pressure vessel 4. The liner 6 has a central cylindrical portion 8 defining a longitudinal axis 10 and two dome-shaped longitudinal ends 12. The liner 6 has a plane of symmetry which is perpendicular to the longitudinal axis 10 and pass through a center of volume of the liner 6.

The pressure vessel 4 comprises a boss 14 for charging and discharging a fluid into and out of the liner 6. The boss 14 is fitted in an aperture located at one of the dome-shaped longitudinal ends 12 of the liner 6.

The pressure vessel 4 comprises at least one dome reinforcement shell 16 fitted on one of the dome-shaped longitudinal ends 12 of the liner 6. In this embodiment, the pressure vessel 4 comprises one dome reinforcement shell 16 fitted on each of the dome-shaped longitudinal ends 12 of the liner 6, the two dome reinforcement shells 16 being symmetric from each other with respect to the aforementioned plane of symmetry. In the following, only one dome reinforcement shell 16 will be described, knowing the other one can be deduced by symmetry with respect to the plane of symmetry.

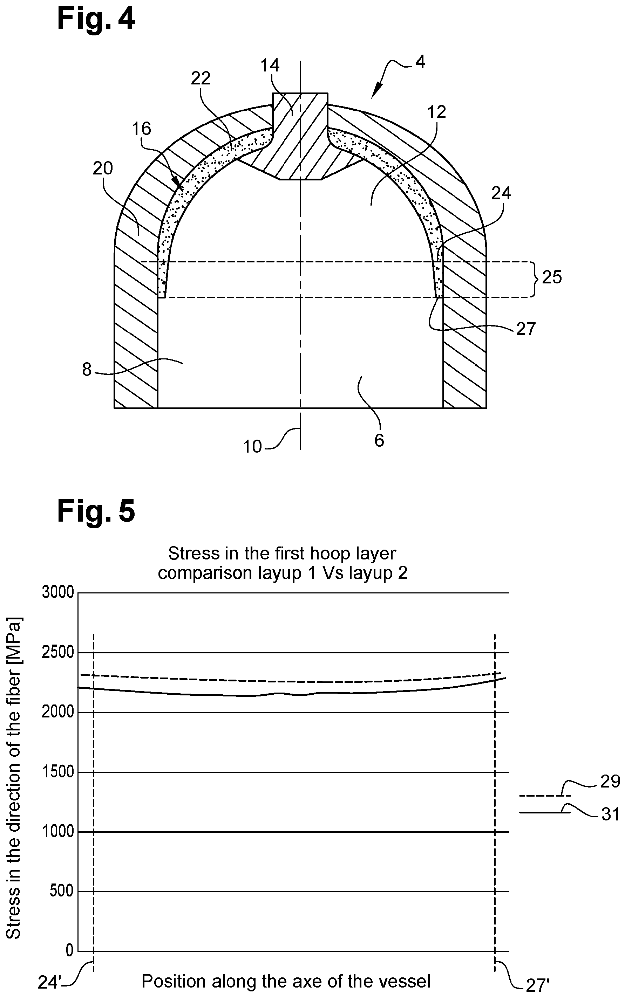

As illustrated in figures 2 and 4, the liner 6 comprises a shoulder or intermediate portion 18 dimensioned so as to accommodate the dome reinforcement shell 16 such that the dome reinforcement shell 16 flushes with the liner 6.

The pressure vessel 4 comprises an outer composite structure 20 enclosing or encasing the liner 6 and the dome reinforcement shells 16. Such outer composite structure 20 being well-known in the manufacturing of pressure vessels, it will not be further described in the following of the description.

The dome reinforcement shell 16 consists of a winding of layers of fiber-reinforced composite material tapes. The fiber-reinforced composite material may either be pre-impregnated and cured after being laid or not be pre-impregnated and impregnated by, for example, a resin infusion process or a resin transfer molding process, commonly called a RTM process. During such processes, the curing of the composite material takes place while the composite material remains inside the resin infusion tool or the resin transfer mold. It should be noted that the RTM process permits to obtain an extra smooth outer surface of the dome reinforcement shell 16 with decreased internal stresses. The dome reinforcement shell 16 has a dome-shaped portion 22 with a base 24 and a central axis which is coaxial with the longitudinal axis 10 of the liner 6. The layers comprise:
- at least one proximal layer of fiber-reinforced composite material, the at least one proximal layer having a start angle α₁ with respect to the central axis measured at a first end of the proximal layer, with α₁ strictly comprised between 0° and 90°, and
- at least one distal layer of fiber-reinforced composite material, the at least one distal layer having a start angle α₂, illustrated on figure 2, with respect to the central axis measured at a first end of the distal layer, with α₂ strictly comprised between 0° and α₁.

The start angle α₁ is the angle formed between the central axis 10 and a "start" tangent of an orthogonal projection of a fiber tow of the proximal layer onto a cut plane passing through the central axis.

The start angle α₂ is the angle formed between the central axis 10 and a "start" tangent of an orthogonal projection of a fiber tow of the distal layer onto a cut plane passing through the central axis.

Here, α₁ is comprised between 60° and 75°, preferably comprised between 70° and 75°, and α₂ is comprised between 10° and 20°, preferably comprised between 13° and 17°.

In this embodiment, the layers further comprise several sets of intermediate layers of fiber-reinforced composite material laid between the at least one proximal layer and the at least one distal layer, each of the sets of intermediate layers having a start angle αᵢ with respect to the central axis 10 strictly comprised between α₁ and α₂. The sets of intermediate layers are such that their respective start angles αᵢ with respect to the central axis 10 gradually decrease from the at least one proximal layer to the at least one distal layer.

The start angle αᵢ is the angle formed between the central axis 10 and a "start" tangent of an orthogonal projection of a fiber tow of the intermediate layer onto a cut plane passing through the central axis 10.

In this embodiment, the layers further comprise at least one additional layer of fiber-reinforced composite material laid below the at least one proximal layer, the at least one additional layer having a start angle α₀ with respect to the central axis 10, with α₀ strictly comprised between α₁ and 90°, and preferably comprised between 82° and 87°.

The start angle α₀ is the angle formed between the central axis 10 and a "start" tangent of an orthogonal projection of a fiber tow of the start layer onto a cut plane passing through the central axis.

In this embodiment, the layers are arranged such that:
- the at least one proximal layer has an end angle β₁ with respect to the central axis 10, with β₁ strictly comprised between 40° and 90°, and
- the at least one distal layer has an end angle β₂, illustrated on figure 2, with respect to the central axis 10, with β₂ strictly comprised between 40° and β₁, and/or
- each of the sets of intermediate layers has an end angle βᵢ with respect to the central axis 10 strictly comprised between β₁ and β₂, and/or
- the at least one additional layer has an end angle β₀ with respect to the central axis 10, with β₀ strictly comprised between β₁ and 90°, and preferably comprised between 82° and 87°.

The end angle β₁ is the angle formed between the central axis 10 and an "end" tangent of an orthogonal projection of a fiber tow of the proximal layer onto a cut plane passing through the central axis 10.

The end angle β₂ is the angle formed between the central axis 10 and an "end" tangent of an orthogonal projection of a fiber tow of the distal layer onto a cut plane passing through the central axis 10.

The end angle βᵢ is the angle formed between the central axis 10 and an "end" tangent of an orthogonal projection of a fiber tow of the intermediate layer onto a cut plane passing through the central axis 10.

The end angle β₀ is the angle formed between the central axis 10 and an "end" tangent of an orthogonal projection of a fiber tow of the start layer onto a cut plane passing through the central axis 10.

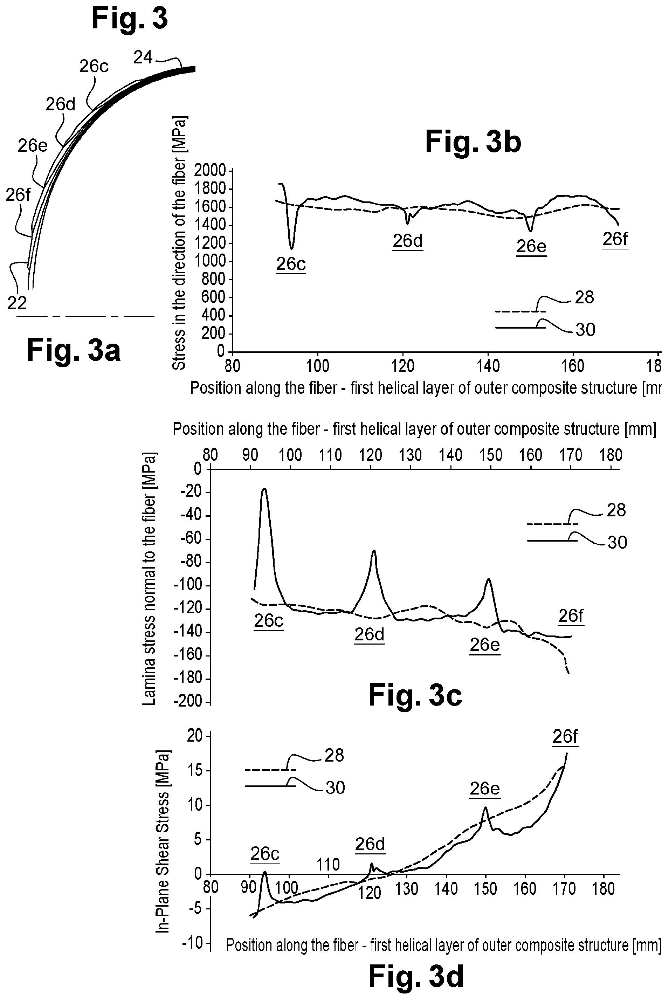

Figures 3a to 3d illustrate simulations in the software ABAQUS comparing different stresses in the dome reinforcement shell 16 and in a dome reinforcement shell as proposed by the document DE 10 2017 208 492 A1 cited in the preamble.

Figure 3a shows four positions 26c, 26d, 26e and 26f of the dome reinforcement shell 16 which correspond to locations of sharps edges visible described in the preamble. Figure 3b illustrates the lamina stress in the fiber direction in the filament, which corresponds to the output UVARM8 in the simulation, Figure 3c illustrates the lamina stress in a direction normal to the fiber direction in the filament, which corresponds to the output UVARM10 in the simulation, and Figure 3d illustrates the in-plane shear stress in the filament, which corresponds to the output UVARM13 in the simulation. In these three figures, the dotted line 28 corresponds to the evolution of the stress in the dome reinforcement shell 16 according to the invention, and the full line 30 corresponds to the evolution of the stress in the dome reinforcement shell of the prior art.

The figures 3b, 3c and 3d show two improvements coming from the invention. First, the invention permits to smoothen the evolution of the different stresses along the dome reinforcement shell, thus eliminating the zones of concentrated stress that could lead to potential breakage of the pressure vessel. Such breakage is typically generated after a consecutive pressure cycling going from, for example, 20 bar to 700 bar. Second, the overall stress in the dome reinforcement shell is slightly lowered in the dome reinforcement shell according to the invention, making it more reliable than the one of the prior art.

According to a variant of this embodiment illustrated on figure 4, the base 24 of the dome reinforcement shell 16 is extended by a hollow cylinder forming an integral extension portion 25 of the dome reinforcement shell 16. The integral extension portion 25 has a free end which corresponds to a tip 27 of the dome reinforcement shell 16. The tip 27 cooperates with the shoulder 18 of the liner 6 to accommodate the dome reinforcement shell 16 when the dome reinforcement shell 16 flushes with the liner 6. In this case, the at least one additional layer of fiber-reinforced composite material laid below the at least one proximal layer is a hoop layer forming an angle α₀' with respect to the central axis 10, with α₀' approximately equal to 90°.

A method for manufacturing the dome reinforcement layer will now be presented.

First, a mandrel having two symmetrical dome-shaped portions defining a central axis is provided. Then the winding of the layers as described above is carried out on the mandrel, such that the additional layer, the proximal layer, the intermediate layers and the distal layer are wound in this order on the mandrel. As an example of realization of such winding, the angles of the different layers may be as following, with five intermediate layers: α₀ = 85° ; α₁ = 71,3° ; αᵢ = {63,6° ; 56,2° ; 44,9° ; 33,4° ; 25,3°} , α₂ = 15°. Each of the layers has a layer thickness which is comprised between 0,5 and 1 mm, more preferably comprised between 0,7 and 0,85 mm.

In the case of the variant of the embodiment described above, the at least one additional layer is wound on the mandrel following a hoop pattern. In other words, the layer with the angle α₀ is replaced by a layer which as an angle α₀' equal to 90°.

After the winding, the layers are split in two symmetrical parts in order to obtain two separate dome reinforcement shells 16. The splitting operation is carried out by circumferentially cutting the pair of dome reinforcement shells 16 in two symmetrical parts. The two dome reinforcement shells 16 are impregnated, if the filament is not pre-impregnated, and cured then finally removed from the mandrel.

With two dome reinforcement shells 16 now manufactured, it is possible to implement a method for manufacturing the pressure vessel 4. The liner 6 is provided and the boss 14 is coupled to one of the dome-shaped longitudinal ends of the liner 6. At least one of the dome reinforcement shells 16, preferably both of them, is fitted over the dome-shaped longitudinal ends of the liner on the shoulder such that the dome reinforcement shell 16 flushes with the liner 6. Finally, the outer composite structure 20 is laid over the liner 6 and the at least one dome reinforcement shell 16 so as to enclose or encase the liner 6 and the at least one dome reinforcement shell 16 therein.

Figure 5 illustrates simulations in the software ABAQUS comparing different stresses in the outer composite structure 20 enclosing or encasing both the liner 6 and a dome reinforcement shell 16 comprising an integral extension portion 25. The stresses comparison is performed in the first hoop layer of the section of the outer composite structure 20 surrounding the integral extension portion 25, between a first axial position 24' and a second axial position 27' along the longitudinal axis 10 of the vessel, corresponding respectively to the axial position of the base 24 and the axial position of the tip 27 along the central axis 10 of the dome reinforcement shell 16.

In this figure, the dotted line 29 corresponds to the evolution of the internal stress in the first hoop layer of the outer composite structure 20 when the dome reinforcement shell 16 is without an additional layer, and the full line 31 corresponds to the evolution of the internal stress in the first hoop layer of the outer composite structure 20 when the dome reinforcement shell 16 comprises an additional layer. In this simulation, the internal stress in the first hoop layer of the outer composite structure 20 is the lamina stress in the fiber direction in the filament of the first hoop layer of the outer composite structure 20.

The figure 5 shows a third improvement coming from the invention. Indeed, the internal stress in the first hoop layer of the outer composite structure is slightly lowered in the outer composite structure when the dome reinforcement shell comprises an additional layer versus when the dome reinforcement does not comprise an additional layer. This allows reducing the load on the first hoop layer of the outer composite structure surrounding the integral extension portion of the dome reinforcement shell.

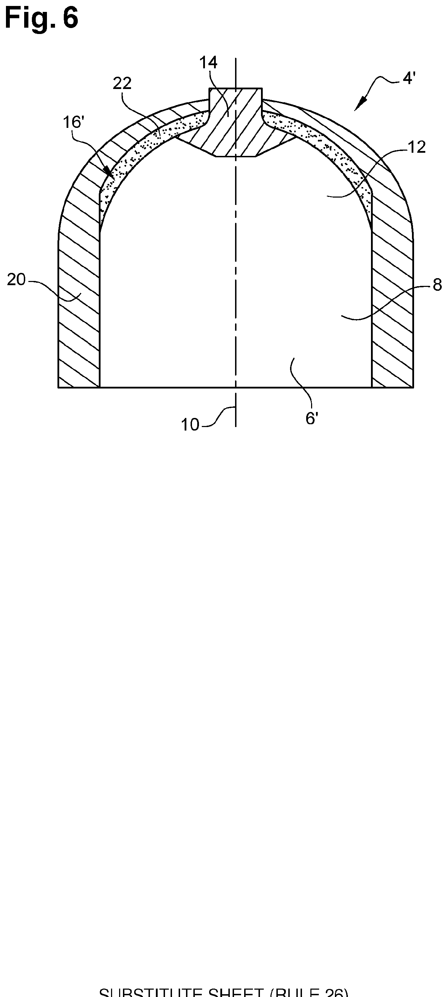

Figure 6 represents a half of a pressure vessel 4' according to a second embodiment of the invention. It differs from the pressure vessel of the first embodiment of the invention in that it comprises a liner 6' which does not comprise a shoulder. Instead, the shape of the dome reinforcement shell 16' is adapted such that it does not generate a surface discontinuity when laid on the liner 6', as illustrated.

The here-above embodiments are illustrative and not restrictive embodiments. Obviously, many modifications and variations of the present invention are possible in the light of the above teachings without deviating from its inventive concept. It has therefore to be understood that the invention may be practiced otherwise that as specifically described.

### Numerical references

2: vehicle
4; 4': pressure vessel
6; 6': liner
8: central cylindrical portion
10: longitudinal axis/central axis
12: dome-shaped longitudinal end
14: boss
16; 16': dome reinforcement shell
18: shoulder
20: outer composite structure
22: dome-shaped portion
24: base of the dome-shaped portion
24': first axial position
25: integral extension portion
26c, 26d, 26e, 26f: positions of the dome reinforcement shell
27: tip of the dome reinforcement shell
27': second axial position
28; 29: dotted line
30; 31: full line

## Claims

1. Dome reinforcement shell (16; 16') for a pressure vessel, consisting of a winding of layers of fiber-reinforced composite material tapes, having a dome-shaped portion (22) with a base (24) and a central axis (10), the layers comprising:
- at least one proximal layer of fiber-reinforced composite material, the at least one proximal layer having a start angle α₁, with respect to the central axis (10) measured at a first end of the proximal layer, corresponding to the angle formed between the central axis (10) and a start tangent of an orthogonal projection of a fiber tow of the proximal layer onto a cut plane passing through the central axis (10), with α₁ strictly comprised between 0° and 90°, and
- at least one distal layer of fiber-reinforced composite material, the at least one distal layer having a start angle α₂, with respect to the central axis (10) measured at a first end of the distal layer, corresponding to the angle formed between the central axis (10) and a start tangent of an orthogonal projection of a fiber tow of the distal layer onto a cut plane passing through the central axis (10), with α₂ strictly comprised between 0° and α₁.

2. Dome reinforcement shell (16; 16') according to claim 1, wherein α₁ is comprised between 60° and 75°, preferably comprised between 70° and 75°.

3. Dome reinforcement shell (16; 16') according to claim 1 or 2, wherein α₂ is comprised between 10° and 20°, preferably comprised between 13° and 17°.

4. Dome reinforcement shell (16; 16') according to any of claims 1 to 3, comprising at least one set of intermediate layers of fiber-reinforced composite material laid between the at least one proximal layer and the at least one distal layer, each of the sets of intermediate layers having a start angle αᵢ with respect to the central axis (10) strictly comprised between α₁ and α₂.

5. Dome reinforcement shell (16; 16') according to claim 4, comprising several sets of intermediate layers which start angles αᵢ with respect to the central axis (10) gradually decrease from the at least one proximal layer to the at least one distal layer.

6. Dome reinforcement shell (16; 16') according to any of claims 1 to 5, further comprising an integral extension portion (25) of revolution about the central axis (10) extending axially from the base (24) of the dome-shaped portion (22).

7. Dome reinforcement shell (16; 16') according to claim 6, wherein the integral extension portion (25) has an inner surface and an outer peripheral surface, and wherein the outer peripheral surface is a cylindrical surface and the inner surface is a surface selected from the group consisting of cylindrical, frustoconical, curved and combinations thereof.

8. Dome reinforcement shell (16; 16') according to any of claims 1 to 7, further comprising at least one additional layer of fiber-reinforced composite material, the at least one additional layer having a start angle α₀ with respect to the central axis (10), with α₀ strictly comprised between α₁ and 90°, and preferably comprised between 82° and 87°.

9. Dome reinforcement shell (16; 16') according to claim 8, wherein:
- the at least one proximal layer has an end angle β₁ with respect to the central axis (10), with β₁ strictly comprised between 40° and 90°, and
- the at least one distal layer has an end angle β₂ with respect to the central axis (10), with β₂ strictly comprised between 40° and β₁, and/or
- each of the sets of intermediate layers has an end angle βᵢ with respect to the central axis (10) strictly comprised between β₁ and β₂, and/or
- the at least one additional layer has an end angle β₀ with respect to the central axis (10), with β₀ strictly comprised between β₁ and 90°, and preferably comprised between 82° and 87°.

10. Dome reinforcement shell (16; 16') according to claim 6, further comprising at least one additional layer of fiber-reinforced composite material, the at least one additional layer being a hoop layer forming an angle α₀' with respect to the longitudinal axis (10), with α₀' approximately equal to 90°.

11. Dome reinforcement shell (16; 16') according to claim 8 or 10, wherein the at least one additional layer of fiber-reinforced composite material lays below the at least one proximal layer.

12. Pressure vessel (4; 4'), comprising:
- a liner (6; 6') defining a fluid storage chamber,
- at least one dome reinforcement shell (16; 16') according to any of claims 1 to 11, fit over a dome-shaped longitudinal end (12) of the liner (6; 6'),
- a boss (14), and
- an outer composite structure (20) enclosing or encasing the liner (6; 6') and the at least one dome reinforcement shell (16; 16').

13. Vehicle (2) comprising a pressure vessel (16; 16') according to claim 12.

14. Method for manufacturing a pair of dome reinforcement shells (16; 16') for a pressure vessel, comprising the following successive steps:
(a1) providing a mandrel having two symmetrical dome-shaped portions defining a central axis (10),
(b1) laying at least one proximal layer of fiber-reinforced composite material tapes on the mandrel, the at least one proximal layer having a start angle α₁, with respect to the central axis (10) measured at a first end of the proximal layer, corresponding to the angle formed between the central axis (10) and a start tangent of an orthogonal projection of a fiber tow of the proximal layer onto a cut plane passing through the central axis (10), with α₁ strictly comprised between 0 and 90°, and
(c1) laying at least one distal layer of fiber-reinforced composite material tapes on the mandrel over the at least one proximal layer, the at least one distal layer having a start angle α₂, with respect to the central axis (10) measured at a first end of the distal layer, corresponding to the angle formed between the central axis (10) and a start tangent of an orthogonal projection of a fiber tow of the distal layer onto a cut plane passing through the central axis (10), with α₂ strictly comprised between 0° and α₁, thus obtaining a pair of dome reinforcement shells (16; 16').

15. Method for manufacturing a pressure vessel (4; 4'), comprising the following steps:
- providing a liner (6; 6') defining a fluid storage chamber,
- coupling a boss (14) to a dome-shaped longitudinal end (12) of the liner (6; 6') for charging and discharging a fluid into and out of the fluid storage chamber,
- manufacturing at least one dome reinforcement shell (16; 16') as in claim 14,
- removing the at least one dome reinforcement shell (16; 16') from the mandrel,
- fitting the at least one dome reinforcement shell (16; 16') over the dome-shaped longitudinal end (12) of the liner (6; 6'), and
- laying an outer composite structure (20) over the liner (6; 6') and the at least one dome reinforcement shell (16; 16').

## Patentansprüche

1. Kuppelförmige Verstärkungsschale (16; 16') für einen Druckbehälter, bestehend aus einer Wicklung von Schichten von Bändern aus faserverstärktem Verbundwerkstoff, die einen kuppelförmigen Abschnitt (22) mit einer Basis (24) und einer Mittelachse (10) aufweisen, wobei die Schichten aufweisen:
- mindestens eine proximale Schicht aus faserverstärktem Verbundwerkstoff, wobei die mindestens eine proximale Schicht einen Anfangswinkel α₁ in Bezug auf die Mittelachse (10) aufweist, der an einem ersten Ende der proximalen Schicht gemessen wird und dem Winkel entspricht, der zwischen der Mittelachse (10) und einer Anfangstangente einer orthogonalen Projektion eines Faserkabels der proximalen Schicht auf eine durch die Mittelachse (10) verlaufende Schnittebene gebildet wird, wobei α₁ streng zwischen 0° und 90° liegt, und
- mindestens eine distale Schicht aus faserverstärktem Verbundwerkstoff, wobei die mindestens eine distale Schicht einen Anfangswinkel α₂ in Bezug auf die Mittelachse (10), gemessen an einem ersten Ende der distalen Schicht, aufweist, der dem Winkel entspricht, der zwischen der Mittelachse (10) und einer Anfangstangente einer orthogonalen Projektion eines Faserkabels der distalen Schicht auf eine Schnittebene, die durch die Mittelachse (10) verläuft, gebildet wird, wobei α₂ streng zwischen 0° und α₁ liegt.

2. Kuppelförmige Verstärkungsschale (16'; 16') nach Anspruch 1, wobei α₁ zwischen 60° und 75°, vorzugsweise zwischen 70° und 75°, liegt.

3. Kuppelförmige Verstärkungsschale (16; 16') nach Anspruch 1 oder 2, wobei α₂ zwischen 10° und 20°, vorzugsweise zwischen 13° und 17°, liegt.

4. Kuppel-Verstärkungsschale (16; 16') nach einem der Ansprüche 1 bis 3, die mindestens ein Satz von Zwischenschichten aus faserverstärktem Verbundwerkstoff aufweist, die zwischen der mindestens einen proximalen Schicht und der mindestens einen distalen Schicht angeordnet sind, wobei jedes der Sätze von Zwischenschichten einen Anfangswinkel αᵢ in Bezug auf die Mittelachse (10) hat, der streng zwischen α₁ und α₂ liegt.

5. Kuppelförmige Verstärkungsschale (16; 16') nach Anspruch 4, aufweisend mehrere Sätze von Zwischenschichten, deren Anfangswinkel αᵢ in Bezug auf die Mittelachse (10) von der mindestens einen proximalen Schicht zu der mindestens einen distalen Schicht allmählich abnimmt.

6. Kuppelförmige Verstärkungsschale (16; 16') nach einem der Ansprüche 1 bis 5, ferner aufweisend einen integralen, um die Mittelachse (10) drehbaren Verlängerungsabschnitt (25), der sich axial von der Basis (24) des kuppelförmigen Abschnitts (22) erstreckt.

7. Kuppelförmige Verstärkungsschale (16; 16') nach Anspruch 6, wobei der integrale Verlängerungsabschnitt (25) eine Innenfläche und eine äußere Umfangsfläche aufweist, und wobei die äußere Umfangsfläche eine zylindrische Fläche ist und die Innenfläche eine Fläche ist, die aus der Gruppe ausgewählt ist, die aus zylindrisch, kegelstumpfförmig, gekrümmt und Kombinationen davon besteht.

8. Kuppelförmige Verstärkungsschale (16; 16') nach einem der Ansprüche 1 bis 7, ferner aufweisend mindestens eine zusätzliche Schicht aus faserverstärktem Verbundwerkstoff, wobei die mindestens eine zusätzliche Schicht einen Anfangswinkel α₀ in Bezug auf die Mittelachse (10) aufweist, wobei α₀ streng zwischen α₁ und 90° und vorzugsweise zwischen 82° und 87° liegt.

9. Kuppelförmige Verstärkungsschale (16; 16') nach Anspruch 8, wobei:
- die mindestens eine proximale Schicht einen Endwinkel β₁ in Bezug auf die Mittelachse (10) aufweist, wobei β₁ streng zwischen 40° und 90° liegt, und
- die mindestens eine distale Schicht einen Endwinkel β₂ in Bezug auf die Mittelachse (10) aufweist, wobei β₂ genau zwischen 40° und β₁ liegt, und/oder
- jeder der Sätze von Zwischenschichten einen Endwinkel βᵢ in Bezug auf die Mittelachse (10) aufweist, der streng zwischen β₁ und β₂ liegt, und/oder
- die mindestens eine zusätzliche Schicht einen Endwinkel β₀ in Bezug auf die Mittelachse (102) aufweist, wobei β₀ streng zwischen β₁ und 90°, vorzugsweise zwischen 82° und 87°, liegt.

10. Kuppelförmige Verstärkungsschale (16; 16') nach Anspruch 6, ferner aufweisend mindestens eine zusätzliche Schicht aus faserverstärktem Verbundwerkstoff, wobei die mindestens eine zusätzliche Schicht eine Ringschicht ist, die einen Winkel α₀' in Bezug auf die Längsachse (10) bildet, wobei α₀' ungefähr gleich 90° ist.

11. Kuppelförmige Verstärkungsschale (16; 16') nach Anspruch 8 oder 10, wobei die mindestens eine zusätzliche Schicht aus faserverstärktem Verbundwerkstoff unterhalb der mindestens einen proximalen Schicht liegt.

12. Druckbehälter (4; 4'), aufweisend:
- eine Auskleidung (6; 6'), die eine Fluid-Speicherkammer definiert,
- mindestens eine kuppelförmige Verstärkungsschale (16; 16') nach einem der Ansprüche 1 bis 11, die auf ein kuppelförmiges Längsende (12) der Auskleidung (6; 6') passt,
- einen Vorsprung (14), und
- eine äußere Verbundstruktur (20), die die Auskleidung (6; 6') und die mindestens eine kuppelförmige Verstärkungsschale (16; 16') einschließt oder umhüllt.

13. Fahrzeug (2) aufweisend einen Druckbehälter (4; 4') nach Anspruch 12.

14. Verfahren zur Herstellung eines Paares von kuppelförmigen Verstärkungsschalen (16; 16') für einen Druckbehälter, das die folgenden aufeinanderfolgenden Schritte umfasst:
(a1) Bereitstellen eines Dorns mit zwei symmetrischen, kuppelförmigen Abschnitten, die eine Mittelachse (10) definieren,
(b1) Auflegen mindestens einer proximalen Schicht von Bändern aus faserverstärktem Verbundwerkstoff auf den Dorn, wobei die mindestens eine proximale Schicht einen Anfangswinkel bezüglich der Mittelachse (10), gemessen an einem ersten Ende der proximalen Schicht, aufweist, der dem Winkel entspricht, der zwischen der Mittelachse (10) und einer Anfangstangente einer orthogonalen Projektion eines Faserkabels der proximalen Schicht auf eine durch die Mittelachse (10) verlaufende Schnittebene gebildet wird, wobei α₁ streng zwischen 0 und 90° liegt, und
(c1) Auflegen mindestens einer distalen Schicht von Bändern aus faserverstärktem Verbundwerkstoff auf den Dorn über die mindestens eine proximale Schicht, wobei die mindestens eine distale Schicht einen Anfangswinkel α₂ in Bezug auf die Mittelachse (10) aufweist, der an einem ersten Ende der distalen Schicht gemessen wird, der dem Winkel entspricht, der zwischen der Mittelachse (10) und einer Anfangstangente einer orthogonalen Projektion eines Faserkabels der distalen Schicht auf eine durch die Mittelachse (10) verlaufende Schnittebene gebildet wird, wobei der Winkel streng zwischen 0° und α₁ liegt, wodurch ein Paar kuppelförmige Verstärkungsschalen (16; 16') erhalten wird.

15. Verfahren zur Herstellung eines Druckbehälters (4; 4'), das die folgenden Schritte umfasst:
- Bereitstellen einer Auskleidung (6; 6'), die eine Fluid-Speicherkammer definiert,
- Ankoppeln eines Vorsprungs (14) an ein kuppelförmiges Längsende (12) der Auskleidung (6; 6') zum Einfüllen und Ablassen eines Fluids in die bzw. aus der Fluidspeicherkammer,
- Herstellen mindestens einer kuppelförmigen Verstärkungsschale (16; 16') nach Anspruch 14,
- Entfernen der mindestens einen kuppelförmigen Verstärkungsschale (16; 16') von dem Dorn,
- Aufsetzen der mindestens einen kuppelförmigen Verstärkungsschale (16; 16') auf das kuppelförmige Längsende (12) der Auskleidung (6; 6'), und
- Auflegen einer äußeren Verbundstruktur (20) über die Auskleidung (6; 6') und die mindestens eine kuppelförmige Verstärkungsschale (16; 16').

## Revendications

1. Coque de renfort de dôme (16 ; 16') pour un réservoir sous pression, constituée d'un enroulement de couches de bandes de matériau composite renforcé de fibres, ayant une partie en forme de dôme (22) avec une base (24) et un axe central (10), les couches comprenant :
- au moins une couche proximale de matériau composite renforcé de fibres, l'au moins une couche proximale ayant un angle de départ α₁, par rapport à l'axe central (10) mesuré à une première extrémité de la couche proximale, correspondant à l'angle formé entre l'axe central (10) et une tangente de départ d'une projection orthogonale d'un câble de fibre de la couche proximale sur un plan de coupe passant par l'axe central (10), α₁ étant strictement compris entre 0° et 90°, et
- au moins une couche distale en matériau composite renforcé de fibres, l'au moins une couche distale ayant un angle de départ α₂, par rapport à l'axe central (10) mesuré à une première extrémité de la couche distale, correspondant à l'angle formé entre l'axe central (10) et une tangente de départ d'une projection orthogonale d'un câble de fibre de la couche distale sur un plan de coupe passant par l'axe central (10), avec α₂ strictement compris entre 0° et α₁.

2. Coque de renfort de dôme (16 ; 16') selon la revendication 1, dans laquelle α₁ est compris entre 60° et 75°, de préférence compris entre 70° et 75°.

3. Coque de renfort de dôme (16 ; 16') selon la revendication 1 ou 2, dans laquelle α₂ est compris entre 10° et 20°, de préférence compris entre 13° et 17°.

4. Coque de renfort de dôme (16 ; 16') selon l'une quelconque des revendications 1 à 3, comprenant au moins un ensemble de couches intermédiaires de matériau composite renforcé de fibres posées entre l'au moins une couche proximale et l'au moins une couche distale, chacun des ensembles de couches intermédiaires ayant un angle de départ αᵢ par rapport à l'axe central (10) strictement compris entre α₁ et α₂.

5. Coque de renfort de dôme (16 ; 16') selon la revendication 4, comprenant plusieurs ensembles de couches intermédiaires dont les angles de départ αᵢ par rapport à l'axe central (10) diminuent progressivement de l'au moins une couche proximale à l'au moins une couche distale.

6. Coque de renfort de dôme (16 ; 16') selon l'une quelconque des revendications 1 à 5, comprenant en outre une partie d'extension intégrale (25) de révolution autour de l'axe central (10) s'étendant axialement à partir de la base (24) de la partie en forme de dôme (22).

7. Coque de renfort de dôme (16 ; 16') selon la revendication 6, dans laquelle la partie d'extension intégrale (25) a une surface intérieure et une surface périphérique externe, et dans laquelle la surface périphérique extérieure est une surface cylindrique et la surface intérieure est une surface choisie dans le groupe composé de cylindrique, frustoconical, courbe et combinaisons de ceux-ci.

8. Coque de renfort de dôme (16 ; 16') selon l'une quelconque des revendications 1 à 7, comprenant en outre au moins une couche supplémentaire de matériau composite renforcé de fibres, la couche supplémentaire ayant un angle de départ α₀ par rapport à l'axe central (10), α₀ étant strictement compris entre α₁ et 90°, et de préférence compris entre 82° et 87°.

9. Coque de renfort de dôme (16 ; 16') selon la revendication 8, dans laquelle :
- la ou les couches proximales ont un angle d'extrémité β₁ par rapport à l'axe central (10), β₁ étant strictement compris entre 40° et 90°, et
- l'au moins une couche distale a un angle d'extrémité β₂ par rapport à l'axe central (10), β₂ étant strictement compris entre 40° et β₁, et/ou
- chacun des ensembles de couches intermédiaires a un angle d'extrémité βᵢ par rapport à l'axe central (10) strictement compris entre β₁ et β₂, et/ou
- l'au moins une couche supplémentaire a un angle d'extrémité β₀ par rapport à l'axe central (10), β₀ étant strictement compris entre β₁ et 90°, et de préférence compris entre 82° et 87°.

10. Coque de renfort de dôme (16 ; 16') selon la revendication 6, comprenant en outre au moins une couche supplémentaire de matériau composite renforcé de fibres, l'au moins une couche supplémentaire étant une couche annulaire formant un angle α₀' par rapport à l'axe longitudinal (10), α₀' étant approximativement égal à 90°.

11. Coque de renfort de dôme (16 ; 16') selon la revendication 8 ou 10, dans laquelle l'au moins une couche supplémentaire de matériau composite renforcé de fibres se trouve sous l'au moins une couche proximale.

12. Réservoir sous pression (4 ; 4'), comprenant :
- un liner (6 ; 6') définissant une chambre de stockage de fluide,
- au moins une coque de renfort de dôme (16 ; 16') selon l'une quelconque des revendications 1 à 11, montée sur une extrémité longitudinale en forme de dôme (12) du liner (6 ; 6'),
- un embout (14), et
- une structure composite externe (20) renfermant ou enveloppant le liner (6 ; 6') et l'au moins une coque de renfort du dôme (16 ; 16').

13. Véhicule (2) comprenant un réservoir sous pression (16 ; 16') selon la revendication 12.

14. Procédé de fabrication d'une paire de coques de renfort de dôme (16 ; 16') pour un réservoir sous pression, comprenant les étapes successives suivantes :
(a1) prévoir un mandrin ayant deux parties symétriques en forme de dôme définissant un axe central (10),
(b1) poser au moins une couche proximale de bandes de matériaux composites renforcés de fibres sur le mandrin, l'au moins une couche proximale ayant un angle de départ α₁, par rapport à l'axe central (10) mesuré à une première extrémité de la couche proximale, correspondant à l'angle formé entre l'axe central (10) et une tangente de départ d'une projection orthogonale d'un câble de fibre de la couche proximale sur un plan de coupe passant par le axe central (10), α₁ étant strictement compris entre 0 et 90°, et
(c1) poser au moins une couche distale de bandes en matériau composite renforcé de fibres sur le mandrin sur l'au moins une couche proximale, l'au moins une couche distale ayant un angle de départ α₂, par rapport à l'axe central (10) mesuré à une première extrémité de la couche distale, correspondant à l'angle formé entre l'axe central (10) et une tangente de départ d'une projection orthogonale d'un câble de fibre de la couche distale sur un plan de coupe passant par l'axe central (10), α₂ étant strictement compris entre 0° et α₁,
obtenant ainsi une paire de coques de renfort de dôme (16 ; 16').

15. Procédé de fabrication d'un réservoir sous pression (4 ; 4'), comprenant les étapes suivantes :
- mettre à disposition un liner (6 ; 6') définissant une chambre de stockage de fluide,
- coupler un embout (14) à une extrémité longitudinale (12) en forme de dôme du liner (6 ; 6') pour charger et décharger un fluide à l'intérieur et à l'extérieur de la chambre de stockage de fluide,
- fabriquer au moins une coque de renfort de dôme (16 ; 16') selon la revendication 14,
- retirer l'au moins une coque de renfort du dôme (16 ; 16') du mandrin,
- installer l'au moins une coque de renfort de dôme (16 ; 16') sur l'extrémité longitudinale en forme de dôme (12) du liner (6 ; 6'), et
- poser une structure composite externe (20) sur le liner (6 ; 6') et l'au moins une coque de renfort du dôme (16 ; 16').
